# EUROPEAN PATENT SPECIFICATION

(11) **EP 4 203 735 B1**
(45) Date of publication and mention of the grant of the patent: **24.12.2025**
(21) Application number: 21787016.1
(22) Date of filing: 20.09.2021
(51) Int. Cl.: A24F 40/60, A24D 1/02

(54) **ELECTRONIC AEROSOL PROVISION SYSTEM WITH SURFACE LAYER**
ELEKTRONISCHES AEROSOLBEREITSTELLUNGSSYSTEM MIT OBERFLÄCHENSCHICHT
SYSTÈME DE FOURNITURE D'AÉROSOL ÉLECTRONIQUE COMPRENANT UNE COUCHE DE SURFACE

(30) Priority: 06.10.2020 GB 202015829
(43) Date of publication of application: 05.07.2023
(73) Proprietor: Nicoventures Trading Limited, London WC2R 3LA (GB)
(72) Inventor: TAYLOR, Benjamin Francis, London WC2R 3LA (GB)
(74) Representative: Dehns
(86) International application number: PCT/GB2021/052435
(87) International publication number: WO 2022/074357

(56) References cited:
- CA-A1- 3 128 944
- CN-U- 203 505 584
- US-A1- 2015 272 222
- US-A1- 2017 251 724

## Description

### Technical Field

The present disclosure relates to an electronic aerosol provision system, or part thereof, having one or more surface layers.

### Background

Electronic aerosol provision systems, which are often configured as so-called electronic cigarettes, are typically simple and straightforward to use. Nevertheless, the experience of the user can be enhanced by providing some user feedback about the operation of the system. For example, alerts may be issued that allow the user to take preventative action in advance of events that would otherwise disrupt use of the system, such as the battery becoming flat, or consumption of all the material from which the aerosol is generated. A variety of alert and notification techniques have been proposed, including visual notifications, which often make use of light emitting diodes, and audible notifications such as the broadcast of beeps or spoken word messages. It is desirable that communication of system details to the user be performed so as to reduce the chance of notifications being missed or overlooked. Flexibility in how the notification delivery means can be arranged and formatted is therefore useful.

US 2015/272222 A1 describes an electronic aerosol provision system having an inhalation sensor configured to determine an amount of nicotine consumed by a user, and a visual indicator to output information about the nicotine consumption, which may be formed from light emitting diodes or thermochromic, electrochromic or electroluminescent paints or polymers.

CA 3128944 A1 describes an electronic cigarette having a display integrated into the housing of its liquid store. The display is at least partially transparent, and can be an OLED display or comprise electroluminescent, electronic ink or electrochromic materials.

Approaches to enabling alternative or enhanced techniques suitable for signifying system properties are therefore of interest.

### Summary

According to the invention as defined in independent claim 1, there is provided an electronic aerosol provision system or component of an electronic aerosol provision system comprising: a housing defining an exterior wall of the system or component; a layer applied over all of an outer surface of the housing and conforming to a shape of the outer surface, the layer operable to change its visual appearance when an electrical current is supplied to the layer; and a controller configured to supply an electrical current to the layer from a power source of the system in response to a state of one or more elements of the system.

According to the invention as defined in independent claim 13, there is provided a method for fabricating an electronic aerosol provision system or component of an electronic aerosol provision system comprising: arranging elements of the system inside a housing defining an exterior wall of the system; applying a layer over all of an outer surface of the housing in conformity with a shape of the outer surface, the layer operable to change its visual appearance when an electrical current is supplied to the layer; and configuring a controller of the system to supply an electrical current to the layer from a power source of the system in response to a state of one or more elements of the system.

According to the invention as defined in independent claim 14, there is provided an article for an electronic aerosol provision system comprising: a housing defining an exterior wall of the article; a store of aerosol-generating material; a layer applied over all of an outer surface of the housing and conforming to a shape of the outer surface, the layer operable to change its visual appearance when an electrical current is supplied to the layer; and electrical connections for carrying electrical current to the layer from a power source in a device when the article is connected to the device to form the electronic aerosol provision system, according to operation of a controller of the system which is configured to supply an electrical current to the layer from the power source in response to a state of one or more elements of the system.
Furthermore, the approach described herein is not restricted to specific embodiments such as set out below, but includes and contemplates any appropriate combinations of features presented herein. For example, an electronic aerosol provision system or part thereof, or a related method, may be provided in accordance with approaches described herein which includes any one or more of the various features described below as appropriate.

### Brief Description of the Drawings

Various embodiments of the invention will now be described in detail by way of example only with reference to the following drawings in which:
Figure 1 shows a simplified schematic cross-section through an example electronic aerosol provision system in which embodiments of the present disclosure can be implemented;
Figures 2A, 2B and 2C respectively show side exterior views of an example electronic aerosol provision system, an example article and an example device, having surface layers;
Figure 3 shows a perspective exterior view of an example electronic aerosol provision system having a surface layer;
Figure 4 shows a schematic cross-sectional view of part of an example electronic aerosol provision system having a surface layer of electroluminescent material;
Figure 5 shows a schematic cross-sectional view of part of an example electronic aerosol provision system having a surface layer of electrochromic material;
Figure 6 shows a schematic simplified representation of an example circuit for operating a surface layer;
Figure 7 shows a perspective exterior view of a further example electronic aerosol provision system, having multiple surface layers;
Figure 8 shows a schematic simplified representation of a further example circuit, for operating multiple surface layers;
Figure 9 shows a schematic graph of a first example of current supply for operating a surface layer of electroluminescent material;
Figure 10 shows a schematic graph of a second example of current supply for operating a surface layer of electroluminescent material;
Figure 11A shows a schematic graph of a colour state of a surface layer of electrochromic material, and Figure 11B shows schematic graph of an example of current supply for operating the surface layer of electrochromic material;
Figure 12 shows a flow chart of steps in an example method for fabricating an electronic aerosol provision system having a surface layer; and
Figure 13 shows a flow chart of steps in an example method for operating an electronic aerosol provision system having a surface layer.

### Detailed Description

Aspects and features of certain examples and embodiments are discussed / described herein. Some aspects and features of certain examples and embodiments may be implemented conventionally and these are not discussed / described in detail in the interests of brevity. It will thus be appreciated that aspects and features of apparatus and methods discussed herein which are not described in detail may be implemented in accordance with any conventional techniques for implementing such aspects and features.

As described above, the present disclosure relates to (but is not limited to) electronic aerosol or vapour provision systems, such as e-cigarettes. Throughout the following description the terms "e-cigarette" and "electronic cigarette" may sometimes be used; however, it will be appreciated these terms may be used interchangeably with aerosol (vapour) provision system or device. The systems are intended to generate an inhalable aerosol by vaporisation of a substrate (aerosol-generating material) in the form of a liquid or gel which may or may not contain nicotine. Additionally, hybrid systems may comprise a liquid or gel substrate plus a solid substrate which is also heated. The solid substrate may be for example tobacco or other non-tobacco products, which may or may not contain nicotine. The terms "aerosol-generating material" and "aerosolisable material" as used herein are intended to refer to materials which can form an aerosol, either through the application of heat or some other means. The term "aerosol" may be used interchangeably with "vapour".

As used herein, the terms "system" and "delivery system" are intended to encompass systems that deliver a substance to a user, and include non-combustible aerosol provision systems that release compounds from an aerosolisable material without combusting the aerosolisable material, such as electronic cigarettes, tobacco heating products, and hybrid systems to generate aerosol using a combination of aerosolisable materials, and articles comprising aerosolisable material and configured to be used within one of these non-combustible aerosol provision systems. According to the present disclosure, a "non-combustible" aerosol provision system is one where a constituent aerosolisable material of the aerosol provision system (or component thereof) is not combusted or burned in order to facilitate delivery to a user. In some embodiments, the delivery system is a non-combustible aerosol provision system, such as a powered non-combustible aerosol provision system. In some embodiments, the non-combustible aerosol provision system is an electronic cigarette, also known as a vaping device or electronic nicotine delivery (END) system, although it is noted that the presence of nicotine in the aerosolisable material is not a requirement. In some embodiments, the non-combustible aerosol provision system is a hybrid system to generate aerosol using a combination of aerosolisable materials, one or a plurality of which may be heated. Each of the aerosolisable materials may be, for example, in the form of a solid, liquid or gel and may or may not contain nicotine. In some embodiments, the hybrid system comprises a liquid or gel aerosolisable material and a solid aerosolisable material. The solid aerosolisable material may comprise, for example, tobacco or a non-tobacco product.

Typically, the non-combustible aerosol provision system may comprise a non-combustible aerosol provision device and an article (consumable) for use with the non-combustible aerosol provision device. However, it is envisaged that articles which themselves comprise a means for powering an aerosol generator or aerosol generating component may themselves form the non-combustible aerosol provision system. In some embodiments, the non-combustible aerosol provision device may comprise a power source and a controller. The power source may, for example, be an electric power source. In some embodiments, the article for use with the non-combustible aerosol provision device may comprise an aerosolisable material, an aerosol generating component (aerosol generator), an aerosol generating area, a mouthpiece, and/or an area for receiving aerosolisable material.

In some systems the aerosol generating component or aerosol generator comprises a heater capable of interacting with the aerosolisable material so as to release one or more volatiles from the aerosolisable material to form an aerosol. However, the disclosure is not limited in this regard, and applies also to systems that use other approaches to form aerosol, such as a vibrating mesh.

In some embodiments, the article for use with the non-combustible aerosol provision device may comprise aerosolisable material or an area for receiving aerosolisable material. In some embodiments, the article for use with the non-combustible aerosol provision device may comprise a mouthpiece. The area for receiving aerosolisable material may be a storage area for storing aerosolisable material. For example, the storage area may be a reservoir. In some embodiments, the area for receiving aerosolisable material may be separate from, or combined with, an aerosol generating area.

As used herein, the term "component" may be used to refer to a part, section, unit, module, assembly or similar of an electronic cigarette or similar device that incorporates several smaller parts or elements, possibly within an exterior housing or wall. An aerosol provision system such as an electronic cigarette may be formed or built from one or more such components, such as an article and a device, and the components may be removably or separably connectable to one another, or may be permanently joined together during manufacture to define the whole system. The present disclosure is applicable to (but not limited to) systems comprising two components separably connectable to one another and configured, for example, as an article in the form of an aerosolisable material carrying component holding liquid or another aerosolisable material (alternatively referred to as a cartridge, cartomiser, pod or consumable), and a device having a battery or other power source for providing electrical power to operate an aerosol generating component or aerosol generator for creating vapour/aerosol from the aerosolisable material. A component may include more or fewer parts than those included in the examples.

In some examples, the present disclosure relates to aerosol provision systems and components thereof that utilise aerosolisable material in the form of a liquid or a gel which is held in a storage area such as a reservoir, tank, container or other receptacle comprised in the system, or absorbed onto a carrier substrate. An arrangement for delivering the material from the reservoir for the purpose of providing it to an aerosol generator for vapour / aerosol generation is included. The terms "liquid", "gel", "fluid", "source liquid", "source gel", "source fluid" and the like may be used interchangeably with terms such as "aerosol-generating material", "aerosolisable substrate material" and "substrate material" to refer to material that has a form capable of being stored and delivered in accordance with examples of the present disclosure.

More widely, and with relevance to the present disclosure, an aerosol provision system may additionally include a refilling device or unit for replenishing the storage area with aerosol generating material when it has become depleted. As noted, in some configurations, the storage area is intended to be refillable by the user, and a refilling device can be provided to allow the user to accomplish the refilling more easily. For example, the refilling unit can be formatted as a form of "docking station" or "dock" into which an article with a refillable storage area can be inserted. The refilling unit houses a larger reservoir of aerosol generating material, and is configured to automatically dispense the relevant amount of material from the larger reservoir and move it into the storage area of the inserted article. Hence, as used herein, the terms aerosol provision system and the like as set out above are intended to include both systems comprising an article and a device (as separable components or a one-piece electronic cigarette), and larger systems including an article, a device, and a refilling unit. The term component may refer to any or all of these parts. Similarly, the system may also include a unit, station or dock configured to receive and recharge a component containing a power source in the form of a rechargeable battery. One unit, station of dock may be configured to provide both refilling and recharging.

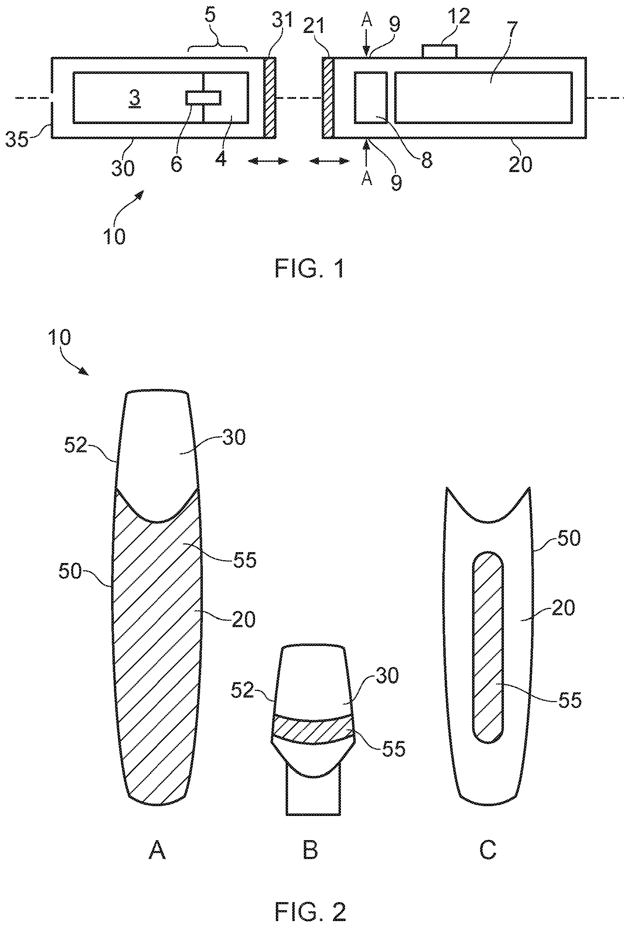

Figure 1 is a highly schematic diagram (not to scale) of a generic example electronic aerosol/vapour provision system such as an e-cigarette 10, presented for the purpose of showing the relationship between the various parts of a typical system and explaining the general principles of operation. Note that the present disclosure is not limited to a system configured in this way, and features may be modified in accordance with the various alternatives and definitions described above and/or apparent to the skilled person. The e-cigarette 10 has a generally elongate shape in this example, extending along a longitudinal axis indicated by a dashed line, and comprises two main components, namely a device 20 (control or power component, section or unit), and an article or consumable 30 (cartridge assembly or section, sometimes referred to as a cartomiser or clearomiser) carrying aerosol-generating material and operating to generate vapour/aerosol.

The article 30 includes a storage area such as a reservoir 3 containing a source liquid or other aerosol-generating material comprising a formulation such as liquid or gel from which an aerosol is to be generated, for example containing nicotine. As an example, the source liquid may comprise around 1% to 3% nicotine and 50% glycerol, with the remainder comprising roughly equal measures of water and propylene glycol, and possibly also comprising other components, such as flavourings. Nicotine-free source liquid may also be used, such as to deliver flavouring. A solid substrate (not illustrated), such as a portion of tobacco or other flavour element through which vapour generated from the liquid is passed, may also be included. The reservoir 3 may have the form of a storage tank, being a container or receptacle in which source liquid can be stored such that the liquid is free to move and flow within the confines of the tank. For a consumable article, the reservoir 3 may be sealed after filling during manufacture so as to be disposable after the source liquid is consumed; otherwise, it may have an inlet port or other opening through which new source liquid can be added by the user. The article 30 also comprises an aerosol generator 5, comprising in this example an aerosol generating component, which may have the form of an electrically powered heating element or heater 4 and an aerosol-generating material transfer component 6. The heater 4 is located externally of the reservoir 3 and is operable to generate the aerosol by vaporisation of the source liquid by heating. The aerosol-generating material transfer component 6 is a transfer or delivery arrangement configured to deliver aerosol-generating material from the reservoir 3 to the heater 4. In some examples, it may have the form of a wick or other porous element. A wick 6 may have one or more parts located inside the reservoir 3, or otherwise be in fluid communication with liquid in the reservoir 3, so as to be able to absorb source liquid and transfer it by wicking or capillary action to other parts of the wick 6 that are adjacent or in contact with the heater 4. This liquid is thereby heated and vaporised, and replacement liquid drawn, via continuous capillary action, from the reservoir 3 for transfer to the heater 4 by the wick 6. The wick may be thought of as a conduit between the reservoir 3 and the heater 4 that delivers or transfers liquid from the reservoir to the heater. In some designs, the heater 4 and the aerosol-generating material transfer component 6 are unitary or monolithic, and formed from a same material that is able to be used for both liquid transfer and heating, such as a material which is both porous and conductive. In still other cases, the aerosol-generating material transfer component may operate other than by capillary action, such as by comprising an arrangement of one or more valves by which liquid may exit the reservoir 3 and be passed onto the heater 4.

A heater and wick (or similar) combination, referred to herein as an aerosol generator 5, may sometimes be termed an atomiser or atomiser assembly, and the reservoir with its source liquid plus the atomiser may be collectively referred to as an aerosol source. Various designs are possible, in which the parts may be differently arranged compared with the highly schematic representation of Figure 1. For example, and as mentioned above, the wick 6 may be an entirely separate element from the heater 4, or the heater 4 may be configured to be porous and able to perform at least part of the wicking function directly (a metallic mesh, for example). In the present context, the system is an electronic system, and the heater 4 may comprise one or more electrical heating elements that operate by ohmic/resistive (Joule) heating, although inductive heating may also be used, in which case the heater comprises a susceptor in an induction heating arrangement. A heater of this type could be configured in line with the examples and embodiments described in more detail below. In general, therefore, an atomiser or aerosol generator, in the present context, can be considered as one or more elements that implement the functionality of a vapour-generating element able to generate vapour by heating source liquid (or other aerosol-generating material) delivered to it, and a liquid transport or delivery element able to deliver or transport liquid from a reservoir or similar liquid store to the vapour-generating element by a wicking action / capillary force or otherwise. An aerosol generator is typically housed in an article 30 of an aerosol generating system, as in Figure 1, but in some examples, at least the heater part may be housed in the device 20. Embodiments of the disclosure are applicable to all and any such configurations which are consistent with the examples and description herein.

Returning to Figure 1, the article 30 also includes a mouthpiece or mouthpiece portion 35 having an opening or air outlet through which a user may inhale the aerosol generated by the heater 4.

The device 20 includes a cell or battery 7 (referred to hereinafter as a battery, and which may or may not be re-chargeable) to provide electrical power for electrical components of the e-cigarette 10, in particular to operate the heater 4. Additionally, there is a controller 8 such as a printed circuit board and/or other electronics or circuitry for generally controlling the e-cigarette. The controller may include a processor programmed with software, which may be modifiable by a user of the system. The control electronics/circuitry 8 operates the heater 4 using power from the battery 7 when vapour is required. At this time, the user inhales on the system 10 via the mouthpiece 35, and air A enters through one or more air inlets 9 in the wall of the device 20 (air inlets may alternatively or additionally be located in the article 30). When the heater 4 is operated, it vaporises source liquid delivered from the reservoir 3 by the aerosol-generating material transfer component 6 to generate the aerosol by entrainment of the vapour into the air flowing through the system, and this is then inhaled by the user through the opening in the mouthpiece 35. The aerosol is carried from the aerosol generator 5 to the mouthpiece 35 along one or more air channels (not shown) that connect the air inlets 9 to the aerosol generator 5 to the air outlet when a user inhales on the mouthpiece 35.

More generally, the controller 8 is suitably configured / programmed to control the operation of the aerosol provision system to provide functionality in accordance with embodiments and examples of the disclosure as described further herein, as well as for providing conventional operating functions of the aerosol provision system in line with established techniques for controlling such devices. The controller 8 may be considered to logically comprise various sub-units / circuitry elements associated with different aspects of the aerosol provision system's operation in accordance with the principles described herein and other conventional operating aspects of aerosol provision systems, such as display driving circuitry for systems that may include a user display (such as an screen or indicator lights, and significantly, the surface layers and coating described herein) and user input detections via one or more user actuable controls 12. It will be appreciated that the functionality of the controller 8 can be provided in various different ways, for example using one or more suitably programmed programmable computers and/or one or more suitably configured application-specific integrated circuits / circuitry / chips / chipsets configured to provide the desired functionality.

The device 20 and the article 30 are separate connectable parts detachable from one another by separation in a direction parallel to the longitudinal axis, as indicated by the double-headed arrows in Figure 1. The components 20, 30 are joined together when the device 10 is in use by cooperating engagement elements 21, 31 (for example, a screw or bayonet fitting) which provide mechanical and in some cases electrical connectivity between the device 20 and the article 30. Electrical connectivity is required if the heater 4 operates by ohmic heating, so that current can be passed through the heater 4 when it is connected to the battery 5. In systems that use inductive heating, electrical connectivity can be omitted if no parts requiring electrical power are located in the article 30. An inductive work coil can be housed in the device 20 and supplied with power from the battery 5, and the article 30 and the device 20 shaped so that when they are connected, there is an appropriate exposure of the heater 4 to flux generated by the coil for the purpose of generating current flow in the material of the heater. The Figure 1 design is merely an example arrangement, and the various parts and features may be differently distributed between the device 20 and the article 30, and other components and elements may be included. The two sections may connect together end-to-end in a longitudinal configuration as in Figure 1, or in a different configuration such as a parallel, side-by-side arrangement. The system may or may not be generally cylindrical and/or have a generally longitudinal shape. Either or both sections or components may be intended to be disposed of and replaced when exhausted (the reservoir is empty or the battery is flat, for example), or be intended for multiple uses enabled by actions such as refilling the reservoir and recharging the battery. In other examples, the system 10 may be unitary, in that the parts of the device 20 and the article 30 are comprised in a single housing and cannot be separated. Embodiments and examples of the present disclosure are applicable to any of these configurations and other configurations of which the skilled person will be aware.

In accordance with the present disclosure, an electronic aerosol provision system is provided with a surface layer that is configured to change its visual appearance when an electric current is supplied to the layer. Various materials are suitable for the layer, and examples will be described in more detail below. In particular, electroluminescent material and electrochromic material can be used. The material is embodied in a liquid form, which can be referred to as "paint", which allows it to be applied to the outer surface of an electronic aerosol provision in such a way as to conform fully with the shape and contours of the surface. The paint may be applied by brushing or spraying for example. The layer can therefore be considered as a coating. The visual appearance change can be activated, operated or implemented under the control of the system's controller. The controller is configured to connect and disconnect the layer to a current supply from the system's battery (or a secondary battery if preferred) to cause the appearance change in response to a specified state or condition of an element or part comprised in the system which is detected by or notified to the controller. The controller generates a control signal to control the supply of current to the layer in order to activate it when the relevant state is in existence.

The layer may be applied to all or part of the exterior of the electronic aerosol provision system, according to the required effect and purpose of the appearance alteration.

The operation or activation of the layer to make the change in appearance can be considered as a transition from a first state to a second state. Examples include an electroluminescent layer, in which a first state is no light emission (off) and a second state is light emission (on), and an electrochromic layer, in which a first state is first colour and a second state is a second colour. These options are described in more detail below.

Figure 2A shows an exterior side view of an example electronic aerosol provision system 10. Although generally elongate, with an end-to-end coupling of the article 30 to the device 20, the overall shape comprises various curves and contours. Each of the system components, namely the device 20 and the article 30, has a housing, 50 and 52 respectively, which provides the outer, exterior wall of the system, and the outer surface of the housings 50, 52 defines the external shape of the system 10. By "exterior wall", is meant a wall that defines part of the exterior of the system, the outer surface of an exterior wall being visible or exposed to view when the system is in use or configured for use. The housings may be made of plastic or metal, for example, and contain the various parts and elements of the system, for example as described above with regard to Figure 1. In this example, the entire outer surface of the housing 50 of the device 20 has an applied layer 55 in accordance with the disclosure, which is powered by a battery (see Figure 1) housed in the device 20 under control of a controller (see Figure 1) also housed in the device 20. Since the layer is formulated as a liquid (or other form that can be manipulated as a liquid), it can be applied substantially evenly to the whole outer surface without difficulty, regardless of how complex the shape of the device is. The materials proposed for this can be implemented as very thin layers so do not compromise the outer shape or add noticeable bulk or weight to the device. In this example, the article 30 does not have an applied surface layer.

The layer need not be applied over the whole outer surface of a system or system component, however. Figure 2B shows an exterior side view of an article 30 having a housing 52. In this case, the layer 55 is applied as a band extending around the perimeter of the housing, orthogonal to the length of the article 30. Similarly, Figure 2C shows an exterior side view of a device 20 having a housing 50, and a layer 55 applied in the form of a narrow strip extending lengthwise along the device 20.

This forms of layer are examples only, and the disclosure is not limited in this regard in any way. The layer may have extend over all or part of the housing of an aerosol provision system of any exterior shape or configuration. If over a part only, the layer may take any form, and may encompass any proportion of the area of the outer surface of the housing, depending on the desired effect.

Where the layer is applied to a device, the layer can be connected directly to the battery in the device (see Figure 1), for supply of the required electrical power. Where the layer is applied to an article, which may not have its own battery, electrical connection of the layer to a battery in the device can be made via the electrical interface between the article and device in place for powering the aerosol generator in the article (for example as described with regard to Figure 1).

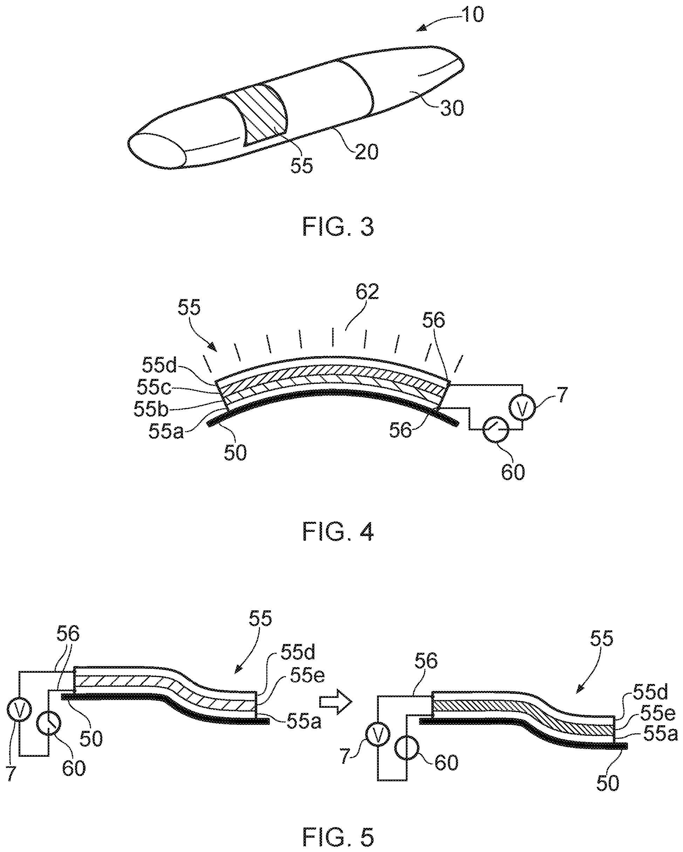

Figure 3 shows a perspective view of an example electronic aerosol provision system 10, having a generally elongate format, and a non-uniform curved cross-section. A layer 55 is applied to a small part of the outer surface of the device housing 50 so as to partially wrap around the device 20, and as can be seen, the layer 55 neatly follows and conforms with the curvature of the outer surface.

The layer can be used to indicate the state of an element of the system to a user of the system. The change in the visual appearance is activated in response to detection of a value of the state which is of interest, so that the user can be made aware of the state. For example, the layer may be operated in response to a low level of remaining battery charge being detected. The user notes the changed appearance of the system, and is thereby informed of the battery state, or state of some other element. These notifications can be automated, whereby activation of the layer is wholly under control of the controller, which makes an activation when a state of interest is detected, discerned, or deduced by the controller.

Alternatively, the system may be provided with a user input element, such as a switch or button. Actuation of this is detected by the controller, in response to which the layer is activated. In this way, the user has control of altering the visual appearance of the device, according to user preference or need for state information about system elements.

Figure 4 shows a schematic cross-section of an example layer, which in this example comprise electroluminescent paint, which is a material able to emit light when current is supplied to it (which may alternatively be described as applying an electric field or voltage across the material). The layer 55 (not to scale) is applied to the outer surface of a housing 50 (shown in part). The layer 55 actually comprises several sublayers of different materials, each of which is formulated as a liquid so as to be able to be brushed, sprayed, dipped or similar onto the housing surface. A first, inner sublayer 55a is applied to the housing's outer surface (after any necessary preparation to the surface to ensure good adhesion). This sublayer 55a comprises an electrically conductive material, to support electrical current over the whole extent of the layer. Over the first sublayer 55a a second sublayer 55b is applied, comprising a dielectric material. This acts to distribute current evenly across the layer, and prevents short-circuiting. Over the second sublayer 55b, a third layer 55c is applied, comprising electroluminescent pigment containing electroluminescent phosphor. This is a material that embodies the electroluminescent effect, in that it is able to emit light when electrical current passes through it. Electroluminescence arises from radiative recombination of electrons and holes in a suitable material, often a semiconductor, which causes the electrons to release energy as photons, in other words, the material emits light. Over the third sublayer 55c is applied a fourth, outer sublayer 55d, which is a further layer of electrically conductive material. The outer sublayer 55d may or may not be the same conductive material as the inner sublayer 55a, but must be at least partially transparent to the wavelength of light emitted from the electroluminescent phosphor in the third sublayer 55c so that the emitted photons can escape from the layer. The inner sublayer 55a and the outer sublayer 55d form a pair of electrodes, and each is provided with an electrical connection 56 (which may be configured in any known manner suitable for electrophoretic paint) to a voltage source 58, in this case a battery in the electronical aerosol provision system. A switch 60 or similar control device is included in the circuit in order to enable and disable connection of the layer 55 to electric power from the battery 58. When the switch is closed, current is enabled to flow through the layer 56, and the electroluminescent pigment in the third sublayer 55c emits light 62. In this way, the layer 55 is "turned on". When a desired period of light emission has elapsed, the switch 60 is opened to disconnect the layer 55 from the battery 58, current flow ceases, light emission ceases, and the layer 55 is "turned off".

An additional outer sublayer is not precluded; this may be applied over the fourth sublayer 55d in order to protect the layer, or to provide a desired surface finish, or to provide visual effects. Any additional outer sublayer should also be at least partially transparent to the emitted photons.

Electroluminescent materials can be organic or inorganic, and are often semiconductors which have a bandwidth of a width that allows light to exit the material. The emitted light is single frequency, and uniform over the layer. Different materials produce different amounts of energy from the radiant recombination, so that the photons are different energies and wavelengths. Hence, different materials emit different colours of light, making electroluminescent paint very versatile. Examples include zinc sulphide doped with manganese (ZnS:Mn), which emits yellow-orange-red light, zinc sulphide doped with copper which emits greenish light, and zinc sulphide dipped with silver, which emits a bright blue light. Many other electroluminescent materials formulated as paint are known. In the current context, the layer 55 can comprise a single electroluminescent material, so that the whole of the layer emits the same colour of light. Alternatively, different electroluminescent materials may be applied to different regions across the layer; all regions will light up when the layer is activated. Thus it is possible to give an illuminable surface pattern to an electronic aerosol provision system, which can be activated at will be a user, or automatically by the system. The pattern may be decorative only, such as a picture or abstract design, or may comprises letters, numbers or symbols. This alternative can allow brand names and logos to be displayed, or can directly indicate element state to the user, by use of appropriate words such "low" or "charged" to convey battery charge level status. A layer which is operable by the user can also be used as general illumination to aid use of the system in low light levels. An extensive surface layer can make the entire device more visible, or smaller layers could be deployed at or around user interaction areas such as user input buttons, a charging port, or the device-article coupling joint.

Electroluminescent paint has low power consumption, and as discussed is embodied as a thin surface layer, so is attractive for use on electronic aerosol provision systems. It offers some advantages over alternative light sources such as light emitting diodes (LEDs) which are commonly used in electronic aerosol provision systems. An electroluminescent layer is a Lambertian radiator, which means that the emitted light is not directional, and the brightness of the illuminated layer appears the same from all viewing angles. In contrast, an LED emits directional light and may be more difficult to perceive from some viewing angles. Hence, system element status communicated by illuminating an LED may be missed by a user if the angle between the user's eye and the LED is suboptimal. Also, the electroluminescent layer can be applied over as great or small an area of the housing surface as desired, so that status indicating illumination can be provided in a more obvious and easily perceived manner. A larger illuminated area than that of an LED can be provided, for example, which is less likely to be obscured by the user's hand or to be imperceptible if the system is turned over or around. Usefully, brightness stays the same regardless of increased emission area. Approaches to increasing the emission area of LEDs, such as the use of moulded plastic light pipes that convey the light output from the LED to a shaped emitting end face of the light pipe set into the wall of the system, decrease the brightness by distributing the LED's output over a larger area. Electroluminescent emission is also visible over significant distances, which again improves perceptibility. For example, a user can more easily see a state of the system from across a room where the system may have been laid down or placed in a charging or refilling dock (either of which may also be considered as a component of the system).

Figure 5 shows a schematic cross-section of an alternative example layer, which in this example comprise electrochromic paint, which is a material able to change its colour when current is supplied to it (which may alternatively be described as applying an electric field or voltage across the material). The left side of Figure 5 shows the electrochromic layer 55, applied to the outer surface of a housing 50 before the supply of current, and the right side shows the layer 55 after the current has been switched on. In common with the electroluminescent example in Figure 4, the layer comprises a number of sublayers, including a conductive inner sublayer 55a and a conductive and at least partly transparent outer sublayer 55d, which act as electrodes. As before, these sublayers 55a, 55d are provided with electrical connections 56 to a battery 7 of the aerosol provision system, in a circuit including a switch 60 that allows the current supply to the layer 55 to be turned on and off. The layer also comprises a third sublayer 55e, placed between the two electrode sublayers 55a, 55b. This intermediate sublayer 55e comprise an electrochromic material, that is, a material that exhibits electrochromism, which is the property of changing colour in an applied electric field. All objects exhibit colour to the human eye owing to the reflection of some part of the visible spectrum of typical white light illumination falling on the item. The specific colour which is observed depends on the part or parts of the spectrum which is reflected, and this depends on the atomic/molecular structure of the material from which the item is made; different structures are able to reflect or absorb photons of different energy, corresponding to frequency/wavelength, which gives light its colour. An electrochromic material exhibits a colour in the same way, but undergoes a change in its structure when an electrical field is applied which alters the reflectance/absorption spectrum so that photons of a different wavelength are reflected and the perceptible colour changes. The electric field causes a redox reaction in the material, with movement of electrons and holes which changes the structure of energy bands in the material, so that different energies of photons are absorbed and reflected from before. Hence, the visual appearance of the layer can be changed from one colour to another by supplying a current. The left side of Figure 5 shows the layer 55 with the switch 60 open; the layer 55e has a first colour (indicated by moderate hatching). The left side of Figure 5 shows the layer 55 after the switch 60 has been closed; the layer 55e has changed to a second colour (indicated by dense hatching). The colour of the electrochromic sublayer 55e is externally visible through the outer electrode sublayer 55d.

Unlike electroluminescence where current needs to be supplied at all times when the effect is desired to be visible, electrochromism has a latency that allows the colour change to persist after current has been supplied. This makes the use of electrochromic paint for the purpose of visual appearance alteration very energy efficient; a brief pulse of current is sufficient to effect the change. Once the electric field is removed, the electrons and holes slowly migrate to their original arrangement so the previous colour is gradually restored. This makes electrochromic paint particularly useful for longer term visual effects, such as allowing the user to change to overall appearance and effect of an aerosol provision system.

A variety of electrochromic materials are known, based on, for example, transition metal oxides, conjugated polymers and viologens. Like electrochromic materials, they can be formulated as "paints", allowing for ease of application in a thin conforming layer to complex and detailed surfaces. The paint format may be liquid, allowing it to be brushed, sprayed, dipped or similar onto an aerosol provision system housing. Gaseous "paint" is the material in a liquid or solid form suspended in a gas, for sprayed application. Solid forms of electrochromic paint are powdered, and can be applied by powder coating techniques.

Additional sublayers may be included in the electrochromic paint layer, such as electrically conductive or insulating layers to control or modify the current flow, or an external layer for protection or to modify the appearance. Different electrochromic materials can be included as regions within the electrochromic layer 55e, so that coloured patterns can be formed, or words, logos and brand names displayed. An external masking layer may be included, which overlays one or more areas of the layer with an opaque mask that obscures the area or areas so they cannot be observed, or a translucent filtering or attenuating mask that changes the perceptible colour or brightness of the layer. Hence, there are various ways in which the layer can be patterned or made more detailed than a single continuous region with an unvarying appearance.

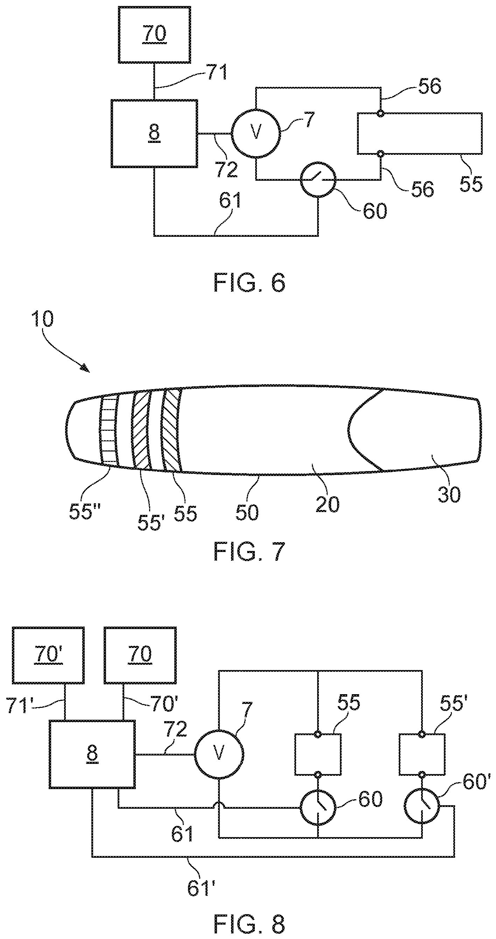

Figure 6 shows a schematic and simplified example circuit diagram suitable for operating a surface layer in accordance with the disclosure. An electronic aerosol provision system includes a controller 8 and a battery 7 housed inside the system housing(s) (not shown), as described above with regard to Figures 1 and 2. The battery 7 powers the controller, and is generally under the control of the controller 8, by signal lines and power lines generally indicated at 72. The surface layer 55, disposed on the outside of the housing, is electrically connected to the battery 7 via connections 56 which include a switch 60 (or other arrangement to make or break the supply of current), as described with regard to Figures 4 and 5. The connections 56 are arranged to pass through the wall of the housing on which the layer is supported, in order to connect the layer on the exterior of the housing to the battery located inside the housing, and may be implemented in any known convenient way, such as by wires or deposited conductive tracks and vias. The switch 60 is operated by the controller 8, so that the controller determines when current passes through the layer 55 in order to activate it.

The circuit also includes a further element 70 of the electronic aerosol provision system, where the element 70 may be any part of the system that can exist in more than one state, where that state is to be reflected in operation of the layer 55. Examples are discussed further below. The element 70 is in communication with the controller 8 by a line 71, which conveys information about the element's state from the element 70 to the controller 8, from which the controller 8 can determine or deduce the state. Depending on the nature of the element 70, the controller may also send control signals to it in order to operate it appropriately for system operation. The element 70 may be powered by the battery 7 (connection not shown).

In operation, the controller receives state data from the element 70, either as a simple received message, or by polling or interrogation. The controller determines the state of the element from the data, and decides if the state is a state which requires activation of the layer 55. If yes, the controller sends a control signal along a line 61 to the switch 60 in order to close it. This completes the circuit connecting the layer 55 to the battery 7, current flows through the layer 55, and the layer is activated. Light is emitted or the layer's colour is changed, depending on the nature of the layer: electroluminescent or electrochromic. When current has flowed for a suitable time period, the controller 8 opens the switch 60 and the current flow ceases.

Examples of element states that can used to determine activation of the surface layer will now be discussed. These are in no way limiting, and any element within an electronic aerosol provision system with a changeable state can be associated with the layer.

As a first example, the battery itself may be the element, with the amount of charge in the battery being a state which is of interest and can usefully be conveyed to the user. The controller may obtain data indicating the battery charge level by any known means. In order to determine if the layer should be activated in response to the charge level, the controller can compare the data with stored threshold or boundary values defining one or more ranges considered to be of value to the user. If the charge level is found to be within a predefined range, the circuit acts to operate the layer so the visual appearance change is effected. For example, it can be useful to alert a user to a low remaining level of battery charge, so that the user can charge or replace the battery for continued use of the system. Accordingly, a low charge threshold can be specified, such as 20%, 15%, 10% or 5% of the total charge of the battery when fully charged. If the controller determines that the actual battery charge is at or below the threshold (in other words, it falls in a range covering 0% up to the threshold), the controller activates the layer to notify the user that the battery is nearly flat. Also, if the battery is rechargeable, it can beneficial to notify the user that a full charge has been restored by a charging cycle. The user then knows to switch of the charging apparatus, thereby saving energy. In this case, the controller can test the obtained battery charge level data to determine when it matches a stored known value for 100% (battery is fully charged), and cause the layer to activate in response to this finding. A range of intermediate charge levels may be defined to the controller also, so that a charge in this range can be communicated to the user, for example to track battery depletion or recharging.

As a second example, the element may comprise the store of aerosolisable material. It may be considered useful to indicate to the user when the amount of aerosolisable material is becoming low, so that the user knows that the article of the system will shortly need to be replaced or refilled. Numerous techniques are known for measuring the level of remaining aerosolisable material in a store, and any may be utilised in the present case. Regardless of the approach, the controller obtains data about the aerosolisable material level (either directly or as a deduction or calculation it performs itself on other data), and compares it to a stored predefined threshold level allocated as corresponding to a "low" level, for example 20%, 15%, 10% or 5% of the total capacity of the store. When the controller determines that the current level has reached or dropped below the threshold level, it activates the layer as previously described.

These are examples of the controller and the layer being configured for automatic operation of the layer in response to the occurrence of a particular state of some element of interest in the system. In other examples, activation of the layer may be under control of the user, allowing the layer to be operated at will. This could be an independent operation of the layer, for example to change the system's appearance according to user preference, or could be linked to the automated examples above, whereby the result of an automated actuation is repeatable by operating a user input or control. For example, the layer could be activated to reflect the current battery level or aerosolisable material level in response to actuation of a user button.

More generally, the circuit in Figure 6 can be configured such that the element 70 is a user input element or control, such as a push button, a switch, a touch-sensitive button or display screen, a pressure sensitive button, or other input element. The user input element commences in an "off" state or condition, and when the user actuates the user input element, it transitions to an "on" state or condition, and communicates this state to the controller (alternatively the controller can poll the input element searching for an on state. When the controller recognises that the user input element is in its on state, the controller sends a control signal to close the switch 60 so that current is supplied to the layer, and the appearance change is implemented. The user input element may be provided with the sole or primary function of enabling the user to change the appearance of the layer, so that the user can customise the appearance of the aerosol provision system at will by operating the user input element between the "on" and "off" state according to whether the appearance corresponding to current or no current is desired. Alternatively, the user input element may have a function of enabling the user to switch some functionality of the aerosol provision system on and off. The appearance of the layer can therefore be used to provide a visual indication of the operating state of the system, such as a particular colour or light pattern corresponding to the associated functionality being operational or non-operational. Examples of this include a user input element that allows the whole system to be switched on and off, a user input element that allows the user to turn the aerosol generator on and off when puffing is desired while the system as a whole is on, and a user input element that allows a particular operating mode of the system to be turned on and off, such as a boost mode in which higher power is provided to the aerosol generator for increased aerosol production. Other functionalities under control of the user are not excluded, however.

Thus far, electronic aerosol provision systems with a single appearance-changing layer covering all or part of the outer surface have been described. The concept is not limited in this regard, however, and it is further proposed that a system or a component of a system might have more than one layer, each covering a different part of the outer surface of the system or component, and each having separate distinct electrical connection to the battery, and being under individual control by the controller. In this way, two or more layers may be arranged for indicating different operational states of the system, for example, a first layer in one region that activates to show low battery charge, and a second layer in another region that activates to show low aerosolisable material. The layers may be electroluminescent paint that emits at different colours, or electrochromic paint that transforms to different colours, so that different colours indicate different conditions. For example, three layers may be provided that show as green, orange/yellow/amber and red when activated in order to indicate high, intermediate and low levels of battery charge. The different layers may all have the same form, for example the same shape and general disposition on the outer surface, or may be differently sized and shaped from one another. They may be contiguous, or separated, and in the latter case may be adjacent or spaced further apart. There is no limitation of the number, arrangement and relative disposition of multiple layers on a system's surface.

Figure 7 shows a side exterior view of an example electronic aerosol provision system configured with additional layers of appearance-changing material. The system 10 comprises an article 30 coupled to a device 20. The device 20 has three separate layers of appearance-changing material, 55, 55' and 55". These each formatted as a band or ring circumscribing an end part of the device housing 50 remote from the end to which the article 30 couples. This is merely a single example configuration, however, and multiple layers can be disposed in any desired shape and pattern.

Also, a single system or a single component of a system may include one or more layers of different appearance-changing material. So, a single system or component may include at least one layer of electroluminescent paint, and at least one layer of electrochromic paint. These may be arranged over contiguous, adjacent or disparate areas of the outer surface, as described above for multiple layers of the same material. Alternatively, layers different materials may be superimposed to achieve particular visual effects. As an entirely nonlimiting example, a device component might have a complete outer covering of electrochromic paint that allows the overall colour of the device to changed by the user if desired, and one or more discrete areas of electroluminescent paint may be applied over the top of the electrochromic layer (with an appropriate intervening electrically insulating layer) in order to allow light-emission display of system element states such as battery charge level.

Figure 8 shows a schematic and simplified example circuit diagram suitable for operating a surface layer plus one or more additional surface layers in accordance with the disclosure. The circuit contains the same parts as the Figure 6 example, and additionally a second system element 70' that is in communication/control with the controller 8 by a line 71'. Also, one additional layer 55' is shown. This is connected to the battery 7 in parallel with the initial layer 55, in order that they can be separately supplied with current. The additional layer 551 has an associated switch 60 or similar, controlled by the controller 8 via line 61.

The controller operates as described for Figure 6 to obtain state information about the element 70 and activate the layer 55 in response to defined state conditions. Additionally, the controller operates to separately obtain state information about the additional element 70', and to activate the additional layer 55' in response to finding a defined state of the additional element, by sending control signals to the additional switch 60' to deliver current to the addition layer 55. This allows entirely independent operation of the two layers 55, 55' to indicate states of two elements in the system.

Alternatively, both layers 55, 55' can be associated with the same element. For example, the first layer 55 can be an electroluminescent paint layer that emits red light, which is controlled to activate for light emission in response to the system battery reaching a low charge state (in need of recharging). The second layer 22 can be an electroluminescent paint layer that emits green light, which is controlled to activate for light emission in response to the system battery being fully charged.

Either arrangement can be readily extended for operation of more than two layers.

As described above, electroluminescent paint operates such that light is emitted when current is passing through the layer. Hence, its operation can be controlled by applying current at the time or times when illumination is desired. Accordingly, any pattern of light emission defined as "on" (light emitted) or "off" (no light emitted) can be achieved, the light being on when current is flowing.

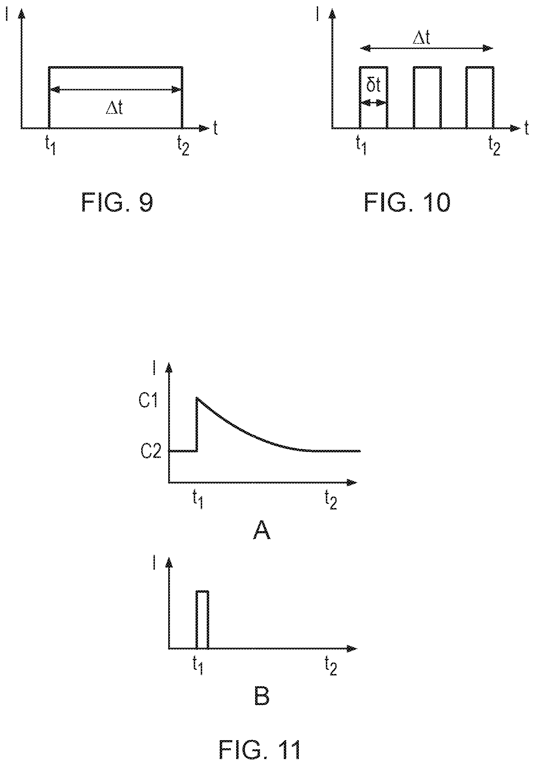

Figure 9 shows a simple graph depicting an example of current provision to an electroluminescent paint layer. Initially current flow to the layer is zero. At a time t1, the controller determines that the system element state associated with operation of the layer has occurred. The controller closes the switch, and current I is delivered to the layer. A desired layer operation period Δt is predefined, for example a few seconds, a minute or several minutes depending on the type of indication being provided and the likely speed of the user perceiving the appearance change. The operation period expires at time t2, when the controller opens the switch to cut the current supply, and the current to the layer returns to zero. During the operation period, a constant current is delivered to the layer, which emits light continuously throughout the operation period.

In examples where the system element is a user input element to enable a user to control operation of an electroluminescent paint layer, t1 represents a time at which the user operates the user input element to indicate an "on" state to the controller, and the layer is turned on for light emission in response. The layer remains operational until the user decides to switch it off (assuming the battery does not expire first) at some later time t2 by operating the user input element to indicate an "off" state to the controller, which cuts the current to turn off the light emission.

As an alternative to continuous light emission, the controller can provide a more complex control signal to the switch, in order to supply current to the layer in a non-continuous intermittent fashion over the operation period, so that the light emission is turned on and off one or more times during the operation period. In this way, the layer can emit light in pulses, bursts or flashes according to any desired pattern. The flashes may be of the same or different durations, and may be spaced by "off" intervals of the same or different durations.

Figure 10 shows a simple graph depicting a second example of current provision to an electroluminescent paint layer. As with the Figure 9 example, the layer is operated over an operation period of Δt starting at t1 and ending at t2. During the operation period, however, the current is delivered as three pulses each of duration δt < Δt, and spaced apart by similar lengths of zero current. This causes the emission of three pulses, flashes or bursts of light from the layer during the operation period. More or fewer pulses can be delivered as desired.

As described above, electrochromic paint does not need a sustained application of current in order to maintain its "on" state of being in a second colour. Rather, the colour change is induced by an initial supply of current, and then gradually decays back to the first current over time after the current is removed.

Figure 11A shows a simple graph depicting an example of electrochromic colour charge over time. Again, the operation period is defined as starting at t1, and extending to a later time t2. Before t1, the electrochromic layer exhibits its first colour C1, and an application of colour at t1 induces the colour change to C2. Over time, the colour gradually reverts to C1.

Figure 11B shows a simple graph depicting an example of current provision to induce the electrochromic change of Figure 11A. A pulse of current is applied at t1, when the controller determines the existence or occurrence of a system element state with which the colour change is associated. No further current is then required, making electrochromically-induced appearance changes available at low energy cost.

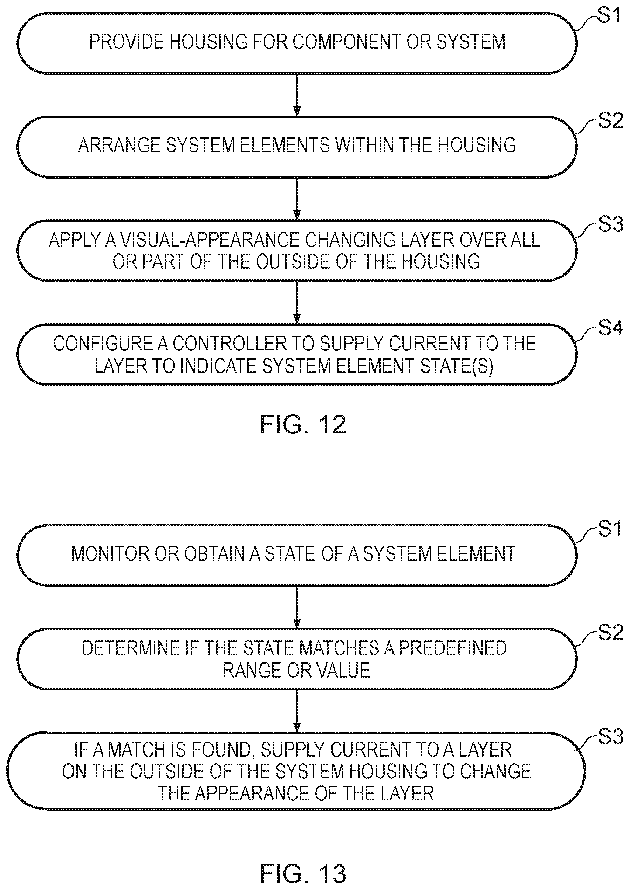

Figure 12 shows a flow chart of an example method of providing or fabricating an electronic aerosol provision system. In a first step S1, a housing is provided for the system, or for a component of the system; namely a device component or an article component where such components can be coupled together to form the system. In a second step S2, appropriate system elements are arranged within the housing, such as in accordance with the example of Figure 1 (although this is not intended to be a limitation in any way). A controller and a battery are included. In a third step S3, a layer of visual appearance-changing material is applied over all or part of the outer surface of the housing, according to the desired visual effect or performance required from the layer. In a fourth step S4, the controller is configured (such as by the provision of suitable software programming for a microprocessor of the controller) to supply electrical current to the layer in order to cause the change in visual appearance, in response to a state or states of one or more elements in the housing. The layer is thereby operable to indicate or otherwise visually reflect one or more states of the one or more elements of the system.

Figure 13 shows a flow chart of an example method of operating an electronic aerosol provision system such as a system made by the method of Figure 12. In a first step S1, a state of an element in the system is monitored, for example an amount of a commodity of an element such as battery charge or aerosolisable material quantity, or an operational condition of an element such as whether it is on or off. In a next step S2, the value of the state obtained in step S1 is tested to determine if it falls within a predefined range of interest (such as above or below a predefined threshold) or matches a predefined value. In a final step S3, if a match is found in the test (the value is in the range or matches the value), current is supplied to the layer on the outside of the system in order to cause a change in the visual appearance of the layer, thereby indicating the state of the system element.

While the concepts herein have been provided with particular reference to an aerosol provision system in the form of an electronic cigarette, with one or more layers applied to a housing of an article and/or device of such a system, the disclosure is not limited to this. As noted above, an aerosol provision system may more widely also include a component configured as a docking unit or station that receives one or more of the other components of the system for the purpose of recharging a battery and/or refilling a storage area with aerosol generating material. A docking unit may be similarly provided with one or more layers as described herein, operable to change appearance when supplied with current in response to a state of one or more elements of the system. The element or elements may be comprised in the docking unit or in the component received in the docking unit. For example, the docking unit may have a surface layer operable to change appearance in order to indicate that the storage area is full, the larger reservoir in the unit is empty, or the battery is charged. Other element states that can usefully be associated with an appearance-changing layer on a housing of such a docking unit will be apparent.

The various embodiments described herein are presented only to assist in understanding and teaching the claimed features. These embodiments are provided as a representative sample of embodiments only, and are not exhaustive and/or exclusive.

## Claims

1. An electronic aerosol provision system (10) or component (20, 30) of an electronic aerosol provision system (10) comprising:
a housing (50, 52) defining an exterior wall of the system or component;
a layer (55) applied over an outer surface of the housing and conforming to a shape of the outer surface, the layer operable to change its visual appearance when an electrical current is supplied to the layer; and
a controller (8) configured to supply an electrical current to the layer from a power source (7) of the system in response to a state of one or more elements (70) of the system, **characterised in that**
the layer (55) is applied over all of the outer surface of the housing.

2. An electronic aerosol provision system or component of an electronic aerosol provision system according to claim 1, in which the layer comprises electroluminescent paint configured to emit light (62) at one or more wavelengths when the layer is supplied with electrical current.

3. An electronic aerosol provision system or component of an electronic aerosol provision system according to claim 2, in which the controller is configured to supply the electrical current as a constant electrical current over an operation period for the layer in order that the layer emits light continuously over the operation period.

4. An electronic aerosol provision system or component of an electronic aerosol provision system according to claim 2, in which the controller is configured to supply the electrical current as a non-continuous electrical current over an operation period for the layer in order that the layer emits pulses of light during the operation period.

5. An electronic aerosol provision system or component of an electronic aerosol provision system according to claim 1, in which the layer comprises electrochromic paint configured to change visual appearance from a first colour to a second colour when the layer is supplied with electrical current.

6. An electronic aerosol provision system or component of an electronic aerosol provision system according to any one of claims 1 to 5, in which the one or more elements of the system comprise the power source, the power source comprises a battery (7), the state comprises an amount of charge in the battery, and the controller is configured to supply electrical current to the layer when the amount of charge is in or at a predefined range or value.

7. An electronic aerosol provision system or component of an electronic aerosol provision system according to claim 6, in which the controller is configured to supply electrical current to the layer when the amount of charge is below a predefined percentage, or when the amount of charge is above a predetermined percentage, or when the amount of charge is at 100%.

8. An electronic aerosol provision system or component of an electronic aerosol provision system according to any of claims 1 to 5, in which the one or more elements of the system comprise a store (3) of aerosolisable material, the state comprises an amount of aerosolisable material in the store, and the controller is configured to supply electrical current to the layer when the amount of aerosolisable material is below a predefined threshold or above a predefined threshold.

9. An electronic aerosol provision system or component of an electronic aerosol provision system according to any one of claims 1 to 5, in which the one or more elements of the system comprise a user input element, the state comprises an on-off condition of the user input element, and the controller is configured to supply electrical current to the layer when the user input element is in an on condition.

10. An electronic aerosol provision system or component of an electronic aerosol provision system according to any one of claims 1 to 9, in which the electronic aerosol provision system or component of an electronic aerosol provision system comprises a device component (20) comprising the power source (7), the device component configured for separable connection to an article (30) comprising a store (3) of aerosol-generating material in order to form the electronic aerosol provision system.

11. An electronic aerosol provision system or component of an electronic aerosol provision system according to any one of claims 1 to 9, in which the electronic aerosol provision system or component of an electronic aerosol provision system comprises an article (30) comprising a store (3) of aerosol-generating material and configured for separable connection to a device component (20) comprising the power source in order to form the electronic aerosol provision system.

12. An electronic aerosol provision system or component of an electronic aerosol provision system according to any one of claims 1 to 9, in which the electronic aerosol provision system or component of an electronic aerosol provision system comprises a docking unit configured to receive an article (30) and/or a device component (20) of the electronic aerosol provision system and to refill a storage area (3) in the article with aerosol generating material and/or recharge a power source (7) in the device component.

13. A method for fabricating an electronic aerosol provision system (10) or component (20, 30) of an electronic aerosol provision system comprising:
arranging elements (70) of the system inside a housing (50, 52) defining an exterior wall of the system;
applying a layer (55) over an outer surface of the housing in conformity with a shape of the outer surface, the layer operable to change its visual appearance when an electrical current is supplied to the layer; and
configuring a controller (8) of the system to supply an electrical current to the layer from a power source (7) of the system in response to a state of one or more elements of the system, **characterised in that** the layer (55) is applied over all of the outer surface of the housing.

14. An article (30) for an electronic aerosol provision system comprising:
a housing (52) defining an exterior wall of the article;
a store (3) of aerosol-generating material;
a layer (55) applied over an outer surface of the housing and conforming to a shape of the outer surface, the layer operable to change its visual appearance when an electrical current is supplied to the layer; and
electrical connections for carrying electrical current to the layer from a power source (7) in a device (20) when the article is connected to the device to form the electronic aerosol provision system, according to operation of a controller (8) of the system which is configured to supply an electrical current to the layer from the power source in response to a state of one or more elements (70) of the system, **characterised in that** the layer (55) is applied over all of the outer surface of the housing.

## Patentansprüche

1. Elektronisches Aerosolbereitstellungssystem (10) oder eine Komponente (20, 30) eines elektronischen Aerosolbereitstellungssystems (10), umfassend:
ein Gehäuse (50, 52), das eine Außenwand des Systems oder der Komponente definiert;
eine Schicht (55), die auf einer Außenoberfläche des Gehäuses aufgebracht ist, und einer Gestalt der Außenoberfläche entspricht, wobei die Schicht betreibbar ist, um ihr visuelles Erscheinungsbild zu ändern, wenn der Schicht ein elektrischer Strom zugeführt wird; und
eine Steuereinheit (8), die konfiguriert ist, um der Schicht von einer Leistungsquelle (7) des Systems als Antwort auf einen Zustand eines oder mehrerer Elemente (70) des Systems einen elektrischen Strom zuzuführen, **dadurch gekennzeichnet, dass**
die Schicht (55) auf der gesamten Außenoberfläche des Gehäuses aufgebracht ist.

2. Elektronisches Aerosolbereitstellungssystem oder Komponente eines elektronischen Aerosolbereitstellungssystems nach Anspruch 1, bei dem die Schicht elektrolumineszierende Farbe umfasst, die konfiguriert ist, um Licht (62) mit einer oder mehreren Wellenlängen zu emittieren, wenn der Schicht elektrischer Strom zugeführt wird.

3. Elektronisches Aerosolbereitstellungssystem oder Komponente eines elektronischen Aerosolbereitstellungssystems nach Anspruch 2, bei dem die Steuereinheit konfiguriert ist, um den elektrischen Strom als einen konstanten elektrischen Strom über eine Betriebsperiode für die Schicht zuzuführen, damit die Schicht über die Betriebsperiode kontinuierlich Licht emittiert.

4. Elektronisches Aerosolbereitstellungssystem oder Komponente eines elektronischen Aerosolbereitstellungssystems nach Anspruch 2, bei dem die Steuereinheit konfiguriert ist, um den elektrischen Strom als einen nicht kontinuierlichen elektrischen Strom über eine Betriebsperiode für die Schicht zuzuführen, damit die Schicht während der Betriebsperiode Lichtimpulse emittiert.

5. Elektronisches Aerosolbereitstellungssystem oder Komponente eines elektronischen Aerosolbereitstellungssystems nach Anspruch 1, bei dem die Schicht elektrochrome Farbe umfasst, die konfiguriert ist, um das visuelle Erscheinungsbild von einer ersten Farbe zu einer zweiten Farbe zu ändern, wenn der Schicht elektrischer Strom zugeführt wird.

6. Elektronisches Aerosolbereitstellungssystem oder Komponente eines elektronischen Aerosolbereitstellungssystems nach einem der Ansprüche 1 bis 5, bei dem das eine oder die mehreren Elemente des Systems die Leistungsquelle umfassen, die Leistungsquelle eine Batterie (7) umfasst, der Zustand eine Ladungsmenge in der Batterie umfasst und die Steuereinheit konfiguriert ist, um der Schicht elektrischen Strom zuzuführen, wenn die Ladungsmenge in oder bei einem vordefinierten Bereich oder Wert ist.

7. Elektronisches Aerosolbereitstellungssystem oder Komponente eines elektronischen Aerosolbereitstellungssystems nach Anspruch 6, bei dem die Steuereinheit konfiguriert ist, um der Schicht elektrischen Strom zuzuführen, wenn die Ladungsmenge unter einem vorbestimmten Prozentsatz ist, oder wenn die Ladungsmenge über einem vorbestimmten Prozentsatz ist, oder wenn die Ladungsmenge bei 100 % ist.

8. Elektronisches Aerosolbereitstellungssystem oder Komponente eines elektronischen Aerosolbereitstellungssystems nach einem der Ansprüche 1 bis 5, bei dem das eine oder die mehreren Elemente des Systems einen Vorrat (3) an aerosolisierbarem Material umfassen, der Zustand eine Menge an aerosolisierbarem Material in dem Vorrat umfasst und die Steuereinheit konfiguriert ist, um der Schicht elektrischen Strom zuzuführen, wenn die Menge an aerosolisierbarem Material unter einem vordefinierten Schwellenwert oder über einem vordefinierten Schwellenwert ist.

9. Elektronisches Aerosolbereitstellungssystem oder Komponente eines elektronischen Aerosolbereitstellungssystems nach einem der Ansprüche 1 bis 5, bei dem das eine oder die mehreren Elemente des Systems ein Benutzereingabeelement umfassen, der Zustand einen Ein-Aus-Zustand des Benutzereingabeelements umfasst und die Steuereinheit konfiguriert ist, um der Schicht elektrischen Strom zuzuführen, wenn das Benutzereingabeelement in einem Ein-Zustand ist.

10. Elektronisches Aerosolbereitstellungssystem oder Komponente eines elektronischen Aerosolbereitstellungssystems nach einem der Ansprüche 1 bis 9, bei dem das elektronische Aerosolbereitstellungssystem oder die Komponente eines elektronischen Aerosolbereitstellungssystems eine Vorrichtungskomponente (20) umfasst, die die Leistungsquelle (7) umfasst, wobei die Vorrichtungskomponente für eine trennbare Verbindung mit einem Gegenstand (30) konfiguriert ist, der einen Vorrat (3) für aerosolerzeugendes Material umfasst, um das elektronische Aerosolbereitstellungssystem auszubilden.

11. Elektronisches Aerosolbereitstellungssystem oder Komponente eines elektronischen Aerosolbereitstellungssystems nach einem der Ansprüche 1 bis 9, bei dem das elektronische Aerosolbereitstellungssystem oder die Komponente eines elektronischen Aerosolbereitstellungssystems einen Artikel (30) umfasst, der einen Vorrat (3) für aerosolerzeugendes Material umfasst und für eine trennbare Verbindung mit einer Vorrichtungskomponente (20) konfiguriert ist, die die Leistungsquelle umfasst, um das elektronische Aerosolbereitstellungssystem auszubilden.

12. Elektronisches Aerosolbereitstellungssystem oder Komponente eines elektronischen Aerosolbereitstellungssystems nach einem der Ansprüche 1 bis 9, bei dem das elektronische Aerosolbereitstellungssystem oder die Komponente eines elektronischen Aerosolbereitstellungssystems eine Andockeinheit umfasst, die konfiguriert ist, um einen Gegenstand (30) und/oder eine Vorrichtungskomponente (20) des elektronischen Aerosolbereitstellungssystems zu empfangen und einen Vorratsbereich (3) in dem Gegenstand mit aerosolerzeugendem Material aufzufüllen und/oder eine Leistungsquelle (7) in der Vorrichtungskomponente aufzuladen.

13. Verfahren zum Fertigen eines elektronischen Aerosolbereitstellungssystems (10) oder einer Komponente (20, 30) eines elektronischen Aerosolbereitstellungssystems, umfassend:
Anordnen von Elementen (70) des Systems innerhalb eines Gehäuses (50, 52), das eine Außenwand des Systems definiert;
Aufbringen einer Schicht (55) über einer Außenoberfläche des Gehäuses in Übereinstimmung mit einer Gestalt der Außenoberfläche, wobei die Schicht betreibbar ist, um ihr visuelles Erscheinungsbild zu ändern, wenn der Schicht ein elektrischer Strom zugeführt wird; und
Konfigurieren einer Steuereinheit (8) des Systems, um der Schicht als Antwort auf einen Zustand eines oder mehrerer Elemente des Systems einen elektrischen Strom von einer Leistungsquelle (7) des Systems zuzuführen, **dadurch gekennzeichnet, dass** die Schicht (55) auf der gesamten Außenoberfläche des Gehäuses aufgebracht wird.

14. Gegenstand (30) für ein elektronisches Aerosolbereitstellungssystem, umfassend:
ein Gehäuse (52), das eine Außenwand des Gegenstands definiert;
einen Vorrat (3) aus aerosolerzeugendem Material;
eine Schicht (55), die auf einer Außenoberfläche des Gehäuses aufgebracht ist, und einer Gestalt der Außenoberfläche entspricht, wobei die Schicht betreibbar ist, um ihr visuelles Erscheinungsbild zu ändern, wenn der Schicht ein elektrischer Strom zugeführt wird; und
elektrische Verbindungen zum Führen von elektrischem Strom zu der Schicht von einer Leistungsquelle (7) in einer Vorrichtung (20), wenn der Gegenstand mit der Vorrichtung verbunden ist, um das elektronische Aerosolbereitstellungssystem nach dem Betrieb einer Steuereinheit (8) des Systems auszubilden, die konfiguriert ist, um einen elektrischen Strom zu der Schicht von der Leistungsquelle als Antwort auf einen Zustand von einem oder mehreren Elementen (70) des Systems zuzuführen, **dadurch gekennzeichnet, dass** die Schicht (55) über die gesamte Außenoberfläche des Gehäuses aufgebracht ist.

## Revendications

1. Système de fourniture d'aérosol électronique (10) ou composant (20, 30) d'un système de fourniture d'aérosol électronique (10) comprenant :
un boîtier (50, 52) définissant une paroi extérieure du système ou composant ;
une couche (55) appliquée sur une surface extérieure du boîtier et épousant la forme de la surface extérieure, la couche pouvant fonctionner pour modifier son aspect visuel lorsqu'un courant électrique est fourni à la couche ; et
un contrôleur (8) configuré pour fournir un courant électrique à la couche à partir d'une source d'alimentation (7) du système en réponse à un état d'un ou de plusieurs éléments (70) du système, **caractérisé en ce que**
la couche (55) est appliquée sur toute la surface extérieure du boîtier.

2. Système de fourniture d'aérosol électronique ou composant d'un système de fourniture d'aérosol électronique selon la revendication 1, dans lequel la couche comprend une peinture électroluminescente configurée pour émettre de la lumière (62) à une ou plusieurs longueurs d'onde lorsque la couche est alimentée en courant électrique.

3. Système de fourniture d'aérosol électronique ou composant d'un système de fourniture d'aérosol électronique selon la revendication 2, dans lequel le contrôleur est configuré pour fournir le courant électrique sous forme de courant électrique constant pendant une période de fonctionnement de la couche afin que la couche émette de la lumière en continu pendant la période de fonctionnement.

4. Système de fourniture d'aérosol électronique ou composant d'un système de fourniture d'aérosol électronique selon la revendication 2, dans lequel le contrôleur est configuré pour fournir le courant électrique sous forme de courant électrique non constant pendant une période de fonctionnement de la couche afin que la couche émette des impulsions de lumière pendant la période de fonctionnement.

5. Système de fourniture d'aérosol électronique ou composant d'un système de fourniture d'aérosol électronique selon la revendication 1, dans lequel la couche comprend une peinture électrochromique configurée pour changer d'apparence visuelle d'une première couleur à une deuxième couleur lorsque la couche est alimentée en courant électrique.

6. Système de fourniture d'aérosol électronique ou composant d'un système de fourniture d'aérosol électronique selon l'une quelconque des revendications 1 à 5, dans lequel le ou plusieurs éléments du système comprennent la source d'alimentation, la source d'alimentation comprend une batterie (7), l'état comprend une quantité de charge dans la batterie, et le contrôleur est configuré pour fournir un courant électrique à la couche lorsque la quantité de charge se situe dans ou à une plage ou valeur prédéfinie.

7. Système de fourniture d'aérosol électronique ou composant d'un système de fourniture d'aérosol électronique selon la revendication 6, dans lequel le contrôleur est configuré pour fournir un courant électrique à la couche lorsque la quantité de charge est inférieure à un pourcentage prédéfini, ou lorsque la quantité de charge est supérieure à un pourcentage prédéfini, ou lorsque la quantité de charge est de 100 %.

8. Système de fourniture d'aérosol électronique ou composant d'un système de fourniture d'aérosol électronique selon l'une quelconque des revendications 1 à 5, dans lequel le ou les éléments du système comprennent un réservoir (3) de matière aérosolable, l'état comprend une quantité de matière aérosolable dans le réservoir, et le contrôleur est configuré pour fournir un courant électrique à la couche lorsque la quantité de matière aérosolable est inférieure à un seuil prédéfini ou supérieure à un seuil prédéfini.

9. Système de fourniture d'aérosol électronique ou composant d'un système de fourniture d'aérosol électronique selon l'une quelconque des revendications 1 à 5, dans lequel le ou plusieurs éléments du système comprennent un élément d'entrée utilisateur, l'état comprend une condition marche-arrêt de l'élément d'entrée utilisateur, et le contrôleur est configuré pour fournir un courant électrique à la couche lorsque l'élément d'entrée utilisateur est dans une condition de marche.

10. Système de fourniture d'aérosol électronique ou composant d'un système de fourniture d'aérosol électronique selon l'une quelconque des revendications 1 à 9, dans lequel le système de fourniture d'aérosol électronique ou composant d'un système de fourniture d'aérosol électronique comprend un composant de dispositif (20) comprenant la source d'alimentation (7), le composant de dispositif étant configuré pour une connexion séparable à un article (30) comprenant un réservoir (3) de matériau générateur d'aérosol afin de former le système de distribution d'aérosol électronique.

11. Système de distribution d'aérosol électronique ou composant d'un système de distribution d'aérosol électronique selon l'une quelconque des revendications 1 à 9, dans lequel le système de fourniture d'aérosol électronique ou le composant d'un système de fourniture d'aérosol électronique comprend un article (30) comprenant un réservoir (3) de matière génératrice d'aérosol et configuré pour être connecté de manière séparable à un composant de dispositif (20) comprenant la source d'alimentation afin de former le système de fourniture d'aérosol électronique.

12. Système de fourniture d'aérosol électronique ou composant d'un système de fourniture d'aérosol électronique selon l'une quelconque des revendications 1 à 9, dans lequel le système de fourniture d'aérosol électronique ou le composant d'un système de fourniture d'aérosol électronique comprend une unité d'ancrage configurée pour recevoir un article (30) et/ou un composant de dispositif (20) du système de fourniture d'aérosol électronique et pour recharger une zone de stockage (3) dans l'article avec un matériau générateur d'aérosol et/ou recharger une source d'alimentation (7) dans le composant de dispositif.

13. Procédé de fabrication d'un système de fourniture d'aérosol électronique (10) ou d'un composant (20, 30) d'un système de fourniture d'aérosol électronique, comprenant :
la disposition d'éléments (70) du système à l'intérieur d'un boîtier (50, 52) définissant une paroi extérieure du système ;
l'application d'une couche (55) sur une surface extérieure du boîtier épousant la forme de la surface extérieure, la couche étant opérable pour changer d'apparence visuelle lorsqu'un courant électrique est fourni à la couche ; et
la configuration d'un contrôleur (8) du système pour fournir un courant électrique à la couche à partir d'une source d'alimentation (7) du système en réponse à un état d'un ou de plusieurs éléments du système, **caractérisé en ce que** la couche (55) est appliquée sur toute la surface extérieure du boîtier.

14. Article (30) pour un système de fourniture d'aérosol électronique comprenant :
un boîtier (52) définissant une paroi extérieure de l'article ;
un réservoir (3) de matériau générateur d'aérosol ;
une couche (55) appliquée sur une surface extérieure du boîtier et épousant la forme de la surface extérieure, la couche étant opérable pour changer d'apparence visuelle lorsqu'un courant électrique est fourni à la couche ; et
des connexions électriques pour acheminer le courant électrique vers la couche à partir d'une source d'alimentation (7) dans un dispositif (20) lorsque l'article est connecté au dispositif pour former le système de fourniture d'aérosol électronique, selon le fonctionnement d'un contrôleur (8) du système qui est configuré pour fournir un courant électrique à la couche à partir de la source d'alimentation en réponse à un état d'un ou plusieurs éléments (70) du système, **caractérisé en ce que** la couche (55) est appliquée sur toute la surface extérieure du boîtier.
